# FASCICULE DE BREVET EUROPEEN

(11) **EP 1 657 687 B1**
(45) Date de publication et mention de la délivrance du brevet: **05.09.2007**
(21) Numéro de dépôt: 04292917.4
(22) Date de dépôt: 08.12.2004
(51) Int. Cl.: G07F 19/00, G07F 7/08

(54) **Carte de paiement prépayée à rechargement instantané à distance par coupon**
Vorausbezahlte Zahlungskarte mit sofortiger Fernaufladung mit Hilfe von Kupons
Prepaid payment card for instant remote recharging by coupon

(30) Priorité: 10.11.2004 US 522822 P; 08.12.2004 US 6833 P
(43) Date de publication de la demande: 17.05.2006
(73) Titulaire: Zormati, Alexandre Sam, New Rochelle, N.Y. 10805 (US)
(72) Inventeur: Zormati, Alexandre Sam, New Rochelle, N.Y. 10805 (US)
(74) Mandataire: Breese, Pierre

(56) Documents cités:
- WO-A-01/59727
- FR-A- 2 813 135
- FR-A- 2 823 882
- US-A1- 2003 004 828
- US-A1- 2004 088 250

## Description

La présente invention se rapporte au domaine des cartes de paiement rechargeables.

La présente invention concerne plus particulièrement un procédé, un coupon prépayé et un système pour le rechargement de cartes bancaires prépayées utilisables sur un réseau interbancaire étendu.

Des solutions de cartes bancaires rechargeables existent déjà. La présente invention propose de simplifier les moyens de recharge et de gagner du temps lors du rechargement par l'utilisation de coupons prépayés.

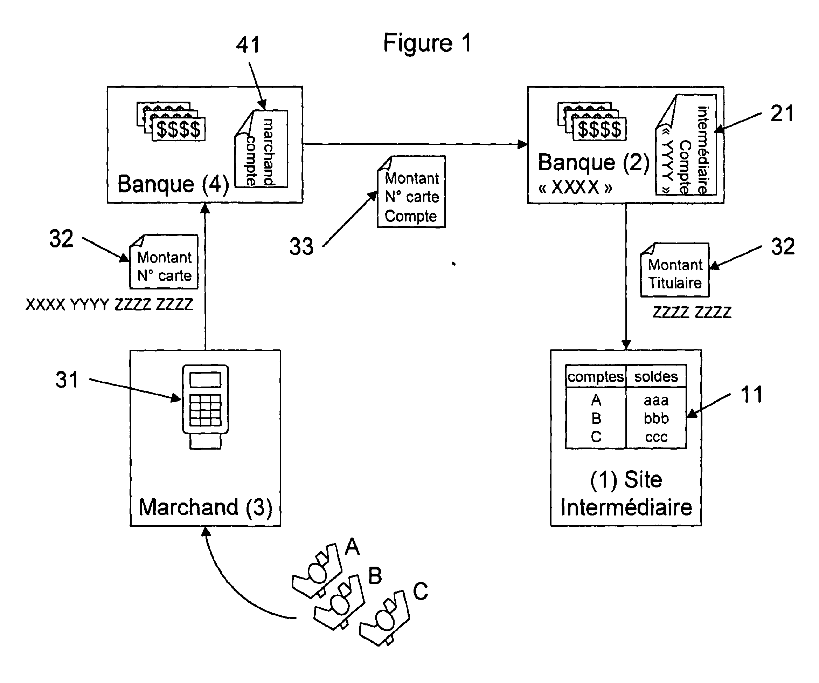

Dans certaines formes de systèmes bancaires, notamment aux Etats-Unis, un intermédiaire financier gèrent un ensemble de comptes bancaires virtuels associés à des cartes de paiement et à des titulaires. La figure 1 illustre le schéma classique de paiement dans un tel système.

L'intermédiaire financier gère un ensemble de comptes (11) appartenant à des titulaires (A, B, C, ...). L'intermédiaire dispose d'un compte personnel (21) hébergé dans une banque (2).

Lors d'une opération de paiement par carte d'un titulaire (A, B, C, ...) chez un marchand (3), le terminal de paiement (TPE) (31) transmet à la banque du marchand (4) les informations relatives à la transaction (32), c'est-à-dire le montant de la transaction et le numéro de la carte bancaire.

L'établissement bancaire (4) crédite le compte (41) du marchand à hauteur du montant de la transaction puis transmet à la banque (2) associée à la carte de paiement les informations de la transaction (montant, numéro de carte et numéro du compte du marchand à créditer).

Le numéro de carte se compose d'une série de chiffres « XXXX YYYY ZZZZ ZZZZ ». Les quatre premiers chiffres « XXXX » servent, par exemple, à identifier la banque de l'intermédiaire pour la transmission (33). Les quatre chiffres suivant « YYYY » permettent d'identifier le compte de l'intermédiaire à l'intérieur de la banque (2). Tous les clients de l'intermédiaire disposent d'une carte de paiement dont les premiers chiffres « XXXX YYYY » sont identiques afin de réaliser les transactions en rapport au compte bancaire (21) de l'intermédiaire.

La banque (2) recevant les informations (33) de transaction (*montant prélevé sur carte « XXXX YYYY ZZZZ ZZZZ » au profit du compte (41)*) débite le compte « YYYY » et informe (34) le site de l'intermédiaire de la transaction réalisée par le client « ZZZZ ZZZZ ».

L'intermédiaire met à jour dans sa base de données le solde du compte associé à la carte « ZZZZ ZZZZ ». Les comptes des titulaires de carte de paiement sont uniquement virtuels : il n'y a pas de compte particulier à chaque titulaire dans une banque mais un compte unique (21) appartenant à l'intermédiaire, les comptes des titulaires (11) étant gérés de façon virtuelle par l'intermédiaire financier.

La présente invention s'inscrit dans un tel contexte pour lequel les cartes de paiement sont des cartes prépayées rechargeables.

De telles cartes bancaires prépayées existent. Notamment aux Etats-Unis, il est possible de réapprovisionner un compte virtuel par l'envoi d'un chèque à l'intermédiaire financier, lequel créditera dans un délai de trois à sept jours le compte virtuel associé à l'émetteur du chèque. Une telle solution ne peut satisfaire un titulaire dont le besoin de crédit sur son compte est immédiat.

L'état de la technique connaît également, par la demande de brevet international WO 03/079 159 (Euronet Worldwide), un procédé et un système de paiement par cartes de comptes prépayés et de réapprovisionnement de ces comptes prépayés. Le rechargement du compte associé à la carte (par la suite, le terme « rechargement de la carte » sera employé dans une même volonté de signification) est réalisé par l'intermédiaire d'un terminal disposé dans un grand nombre de points de vente. Cependant, cette solution ne permet pas un rechargement de la carte à distance puisque cette dernière doit être présentée dans le terminal pour réaliser son réapprovisionnement.

On connaît également, par le brevet américain US 6 473 500 (MasterCard) et la demande de brevet PCT WO 01/009 853 (Software.com), d'autres procédé de rechargement de cartes bancaires prépayés. Cependant, toutes les solutions proposées requièrent également la présence d'un terminal.

On connaît également le document WO 01/59727 qui décrit un procédé de paiement par carte bancaire prépayée fournie par un intermédiaire financier, d'une transaction avec un marchand, conformément au préambule de la revendication 1.

Dans cette solution, le marchand communique directement avec le serveur de gestion (sans l'utilisation d'un serveur bancaire qui est l'intermédiaire garantissant les transactions financières). Un inconvénient majeur de cette solution réside dans le fait que le rechargement de la carte prépayée ne peut être réalisé qu'au travers d'un terminal POS, ce qui ne permet pas, par exemple, un rechargement à distance.

Le problème technique que résout la présente invention consiste en une amélioration des procédés existants de paiement par carte bancaire prépayée, notamment l'amélioration du rechargement des cartes par des coupons prépayés.

On connaît également, par le document US 2003/004828, un procédé de paiement par carte prépayée dans lequel la carte proposé n'est pas une carte bancaire et à cet effet, elle ne peut être reconnue dans un réseau bancaire international comme mentionné dans la présente invention. Dans cette solution, le rechargement de la carte n'est pas réalisé par l'utilisation de coupons prépayés mais par l'utilisation d'autres moyens de paiements tels que par une autre carte bancaire.

Il est aussi connu de l'art antérieur, et notamment par le brevet américain US 6 375 073 (Swisscom) et la demande de brevet international WO 03/019 926 (Sicap), des coupons de rechargement de cartes de données. Ces coupons sont généralement destinés à une utilisation dans le monde de la téléphonie mobile afin de recharger en unités téléphoniques des comptes prépayés de téléphonie mobile. De façon générale, les coupons de rechargement connus de l'art antérieur compensent le coût de l'achat par l'attribution d'unités dont sont constituées les cartes de données.

On connaît également, par la demande de brevet FR 2 813 135, un coupon de rechargement comprenant un numéro unique d'identification et des moyens de masquage à gratter pour cacher ce numéro unique, constituant l'état de la technique le plus proche pour le coupon selon l'invention. La présente invention vise à résoudre un problème technique consistant en une amélioration des coupons existants de rechargement, notamment sur les moyens d'identification de ceux-ci.

La présente invention entend remédier aux inconvénients de l'art antérieur en proposant un procédé conforme à la revendication 1 et un système conforme à la revendication 10. L'invention concerne également un coupon prépayé pour le rechargement de cartes bancaires prépayées conformément à la revendication 8.

D'autres caractéristiques techniques apportées par l'invention sont décrites dans les revendications dépendantes 2 à 7, 9, 11 et 12.

Les clients achètent, au travers l'intermédiaire financier ou leur banque qui fait partie du réseau interbancaire commun mondial, une carte de paiement prépayée, par exemple de type Visa ou Mastercard (noms commerciaux), qui peut se recharger par des coupons du type à gratter vendu dans un réseau de distributeurs agréées. Les clients rechargent leur carte comme les coupons vendus par les opérateurs de téléphonie mobile. Le rechargement de la carte de paiement crédite alors instantanément la carte de paiement du client par un procédé propre au serveur de l'intermédiaire financier et qui donne l'information de rechargement aux processeurs bancaires et au réseau interbancaire mondial (Visa, Mastercard) en même temps. La carte de paiement est ainsi « vue » avec son nouveau solde crédité par les terminaux de paiement du réseau interbancaire. Ainsi il n'est plus nécessaire de recourir à des institutions financières spécifiques ou des banques ce qui résout les problèmes de certains gens qui n'ont pu le droit d'accès à des comptes bancaires ou à d'autres gens à la recherche de tels services. Le détenteur de la carte de paiement pourra effectuer des retraits de sommes d'argent sur n'importe quel distributeur desservi par le réseau interbancaire Visa/Mastercard tout en réalisant des paiements/achats en utilisant cette carte qui est acceptée par tous les commerçants du réseau.

Une telle carte de paiement prépayée rechargeable par coupons offre un grand nombre d'avantages :
- Aucune ouverture de compte bancaire n'est nécessaire ;
- L' « interdit bancaire » disparaît puisqu'il suffit de réapprovisionner son compte pour disposer d'un mode de paiement pratique alors que l'interdit bancaire interdit à un individu de disposer d'un tel moyen pratique ;
- La carte facilite les transferts d'argent instantanés à travers le monde, au profit d'un proche à qui le titulaire de la carte aura mis à sa disposition une carte « clone » ;
- Rémunérer les salariés d'une société au moyen des coupons prépayés au lieu d'émettre des chèques ou de procéder à des transferts d'argent qui ont un coût ;
- Un contrôle de ses dépenses et une sécurité en cas de perte de la carte (retrait limité au solde disponible) ;
- Utilisation traditionnelle sur tout le réseau interbancaire, du type Visa et Mastercard (noms commerciaux).

La présente invention propose également d'apporter d'autres avantages :
- Le rechargement à distance par voie téléphonique (serveur vocal) ou Internet ;
- Le rechargement instantané.

On comprendra mieux l'invention à l'aide de la description, faite ci-après à titre purement explicatif, d'un mode de réalisation de l'invention, en référence aux figures annexées :
- la figure 1 illustre l'architecture d'un système bancaire connu de l'art antérieur ;
- la figure 2 illustre l'architecture du système de rechargement de cartes bancaires prépayées selon la présente invention ;
- la figure 3 est une représentation modulaire du serveur de gestion de la plateforme de rechargement du système de la figure 2 ;
- la figure 4 est un ordinogramme représentant les différentes étapes d'un processus selon la présente invention ;
- les figures 5 et 6 illustrent les échanges d'informations entre différents modules du système lors des opérations de recharge ; et
- les figures 7 et 8 illustrent deux modes d'utilisation de la présente invention.

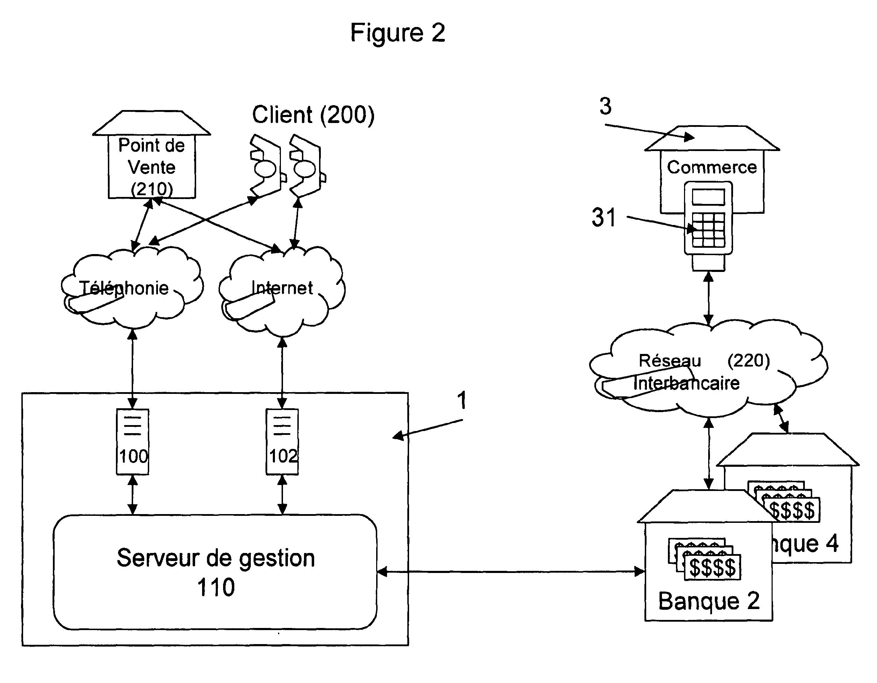

En référence à la figure 2, est représenté un exemple de plateforme pour la mise en oeuvre de la présente invention.

Un intermédiaire financier dispose d'une plateforme technique (1) pour la gestion des cartes de paiement prépayées et des coupons qu'il commercialise.

Cette plateforme est accessible par serveur vocal interactif (100) ou par serveur http (102) relié au réseau Internet. Un serveur de gestion (110) permet de réaliser toutes les opérations qui vont être décrite dans la suite.

Un ensemble de points de ventes (210 - tabac, point téléphone, poste, banque, ...) et d'acquisition des cartes de paiement et/ou des coupons de rechargement pour les clients (abonnés) (200) de l'intermédiaire financier a accès à la plateforme de l'intermédiaire financier (1) par le réseau téléphonique ou Internet.

Le serveur de gestion (110) est connecté, de préférence par une liaison fixe dédiée, à sa banque (2), laquelle appartient à un réseau interbancaire mondial (220) de type, par exemple, Visa ou Mastercard (noms commerciaux).

Les clients peuvent ainsi se rendre dans un grand nombre de commerces (3) tous reliés au réseau interbancaire mondial (220). Les banques des commerçants (4) sont elles-mêmes connectées au réseau interbancaire afin d'y valider les transactions effectuées par les commerçants.

### Carte de paiement.

Une première phase initiale permet l'acquisition d'une carte de paiement prépayée par le client final. Pour ce faire, ce dernier peut utiliser un site web dédié ou un formulaire papier adéquat afin d'y renseigner des données personnelles telles que nom, prénom, adresse, le type de carte de paiement désirée.

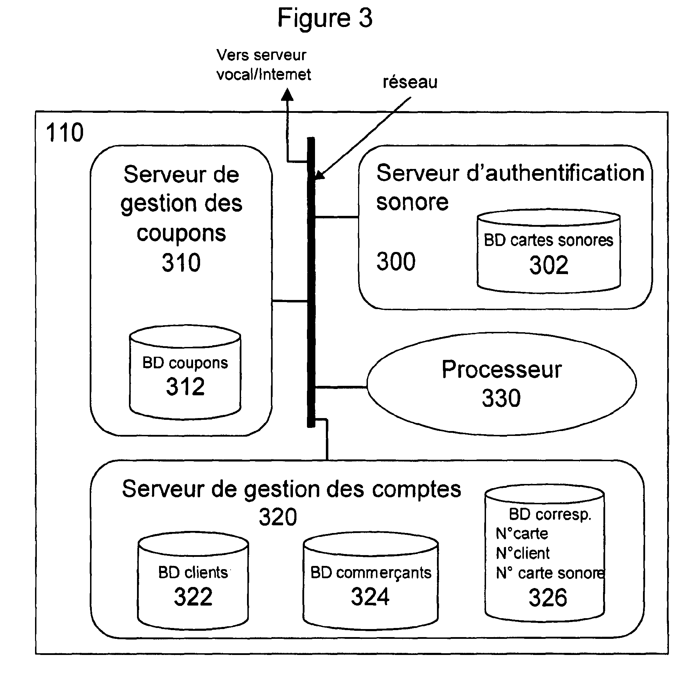

Illustré par la figure 3, le serveur de gestion comprend un serveur d'authentification sonore (300), un serveur de gestion des coupons (310), un serveur *Middle Office* de gestion des comptes clients (320) et un processeur pour les opérations de gestion (330).

L'intermédiaire financier enregistre les données du client dans une base de données client (322) dédiée présente dans le serveur de gestion des comptes.

Une commande de carte de paiement est alors générée par l'intermédiaire vers la banque (2) partenaire. Cette dernière attribue un numéro unique de carte de paiement.

Dans un mode de réalisation, la carte de paiement possède, outre son numéro unique, des moyens d'authentification par signature acoustique imprévisible et unique. Toute technologie connue de l'art antérieur peut être mise en oeuvre. Ces moyens d'authentification sont associés à un numéro unique N-N qui est stocké dans une base de données dédiée (302).

Par retour, la banque (2) informe l'intermédiaire de la création de la carte de paiement et lui communique les numéros uniques de la carte et des moyens d'authentification. Ces numéros sont également enregistrés dans des bases de données au sein du serveur de gestion des comptes: une base de données client (322) pour le numéro de carte et une base de données de correspondance (326) entre les différents numéros associés à un compte client et une carte de paiement: numéro de carte de paiement, numéro N-N, numéro client (identifiant « interne » à la plateforme de l'intermédiaire).

A réception de la carte de paiement ainsi que des codes PIN de rechargement et d'utilisation (pour les achats et les retraits par exemple) composés traditionnellement de quatre chiffres, le client active la carte pour pouvoir bénéficier des services de rechargement. Cette activation peut être, par exemple, réalisée par la transmission, via un serveur vocal (100) de la signature sonore émise pas les moyens d'authentification de la carte et du code PIN de rechargement associé à la carte. Le serveur de gestion vérifie alors la correspondance entre ces deux valeurs et active ou non la carte.

Ces cartes de paiement sont alors utilisables comme une carte de paiement traditionnelle dans l'ensemble des commerces appartenant au réseau interbancaire mondial : les règlements s'effectuent sur les terminaux universels (31, figure 2) et selon le même processus que pour les cartes de paiement à débit immédiat. Elles permettent également de réaliser des retraits dans tout type de distributeur : le retrait d'espèce s'effectue sur tous les guichets automatiques selon le même processus que pour les cartes de paiement à débit immédiat.

Dans un mode de réalisation, les comptes associés aux cartes prépayées ne peuvent pas être négatif d'où l'appellation de carte prépayée puisqu'elle doit « contenir » des fonds préalablement d'une transaction. Ces cartes sont rechargées par l'intermédiaire de coupons de rechargement prépayés.

### Les coupons de rechargement.

Les coupons de rechargement sont des cartes de format carte de crédit comprenant un numéro unique d'identification, un code secret protégé par une couche grattable) et ayant une valeur prédéterminée. Ces coupons peuvent également contenir des moyens d'authentification sonore au même titre que les cartes de paiement prépayées et être personnalisé à des fins publicitaires. Ces moyens d'authentification (unique) sont alors des moyens redondants du numéro unique pour l'identification de ces coupons.

Ces coupons de recharge prépayés sont disponibles et vendus aux clients possédant une carte de paiement prépayée dans l'ensemble des points de vente (210) contre une somme numéraire équivalente à la valeur prédéterminée du coupon.

Suite à l'étape de fabrication des coupons, l'intermédiaire enregistre dans une base de données des coupons (312) les numéros (identification et code secret) de ceux-ci ainsi que la valeur associée à chacun d'eux. Les coupons ont des valeurs entières en devise, par exemple, 50 €, 100 €, 500 €, ..., 50 $, 100 $, ... Cette base de données des coupons (312) est connectée au processeur de gestion (330), lui-même étant interfacé avec la banque (2) de l'intermédiaire financier et avec le serveur vocal (ou le serveur Internet).

La base de données des coupons (312) possède également des moyens, par exemple sous forme d'un drapeau (un champ booléen), précisant l'état actif/inactif des coupons : un coupon inactif ne peut être crédité sur une carte de paiement prépayée au contraire du coupon actif.

Les coupons sont donc vendus par l'intermédiaire à l'ensemble des points de vente (210). Les fonds levés lors de ces ventes sont déposés sur un compte spécifique (21, figure 1) qui sera ultérieurement utilisé par l'intermédiaire pour indemniser les banques des commerçants ayant réalisés des transactions avec l'une des cartes prépayées.

A réception des coupons, les points de vente activent l'ensemble de ces coupons afin qu'ils puissent être crédités sur les comptes prépayés lorsqu'ils seront achetés par les clients de l'intermédiaire financier. Cette activation peut être réalisée au travers du serveur vocal (100), le point de vente s'identifiant (par exemple avec une carte munie de moyens d'authentification sonore) et saisissant l'ensemble des numéros uniques des coupons reçus à activer ou alors des codes d'activation pour les coupons achetés (une base de données des codes d'activation des coupons est alors présente sur le serveur de gestion des coupons). L'activation peut être sécurisée et nécessiter l'utilisation de codes spécifiques d'activation des coupons. De tels codes sont enregistrés dans une base de données spécifique (non représentée) dans le serveur de gestion des coupons (310).

De façon similaire, le point de vente ou tout autre intervenant dans la chaîne (intermédiaire financier, par exemple) peut bloquer ou annuler l'activation d'un ou plusieurs coupons de rechargement. Le drapeau présent dans la base de données des coupons (312) est adapté pour chacun des coupons en fonction de la requête formulée par le demandeur.

En l'état, les coupons sont disponibles à la vente et prêts pour le rechargement de cartes de paiement prépayées.

### Processus de rechargement de la carte de paiement prépayée.

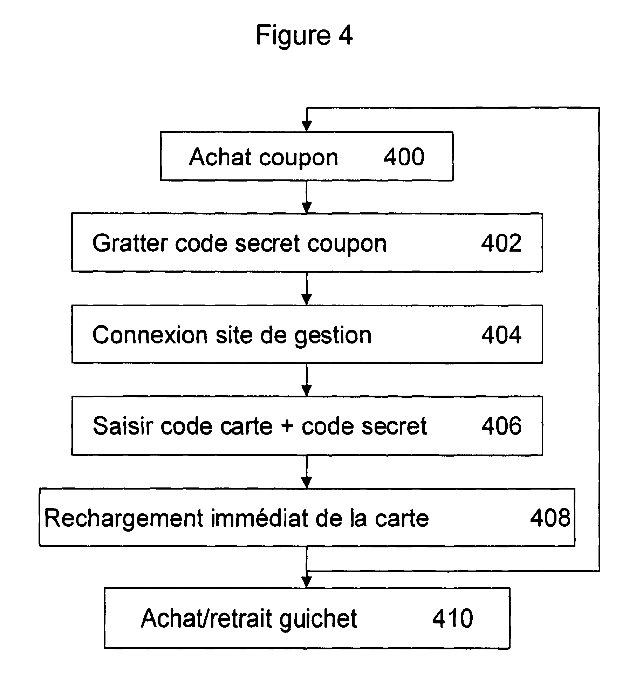

En référence à la figure 4, le processus de rechargement d'une carte de paiement prépayée comprend une première étape d'achat (400) d'un coupon prépayé tel que décrit précédemment dans un des points de vente, du type tabac, poste, point téléphone, ... appartenant au réseau de distribution agréé. L'achat se fait contre le versement d'une somme monétaire équivalente à la valeur prédéfinie du coupon, cette valeur étant la somme qui peut être rechargée sur la carte de paiement prépayée grâce à ce coupon.

Cette vente permet au distributeur de récupérer les fonds versés lors de l'achat du coupon auprès de l'intermédiaire financier. Dans ce mode économique, l'argent versé par le client qui achète un coupon est virtuellement stocké sur le compte bancaire (21).

Une fois le coupon acheté, le client gratte la couche de protection du code secret pour révéler celui-ci (402). Ce code est généralement un code numérique composé de 10 à 20 chiffres, par exemple 10, 12, 14 ou 16. C'est lui qui fait foi de l'unicité du coupon.

Dans un mode de réalisation particulier, le coupon acheté n'est pas doté de code secret caché par une couche à gratter mais de moyens d'authentification sonore tels que mentionnés précédemment. Ces moyens permettent également d'assurer une identification unique du coupon. Dans cette alternative, l'étape 402 n'est pas requise dans le processus.

Dans une variante, ces deux moyens (authentification sonore et code secret caché) sont cumulés pour, d'une part, permettre une identification rapide (sonore) par l'intermédiaire d'un serveur vocal, et d'autre part, de permettre l'identification du coupon lorsque le serveur d'identification sonore n'est pas disponible (rechargement par Internet par exemple).

Le client se connecte ensuite au serveur de gestion pour la recharge de sa carte prépayée (404). Cette opération peut être réalisée par appel téléphonique d'un serveur vocal (100) : le client compose un numéro de téléphone indiqué sur le coupon de recharge et suit les instructions; ou par l'intermédiaire d'un site web Internet sécurisé : le client se connecte au site web de l'intermédiaire financier et procède aux diverses opérations menant au rechargement de la carte de paiement.

Lorsque connecté au serveur de gestion, le client s'identifie, par exemple par le numéro de la carte de paiement, et saisit le code secret du coupon pour créditer la carte du montant du coupon acheté (406).

Le serveur procède alors au rechargement (408) du compte du client, associé à la carte de paiement. Cette opération est effectuée rapidement, de l'ordre d'une seconde. Ainsi les fonds sont immédiatement disponibles sur la carte de paiement.

La carte de paiement dont le solde a été crédité peut enfin être utilisée pour des opérations traditionnelles d'achat/de retrait (410).

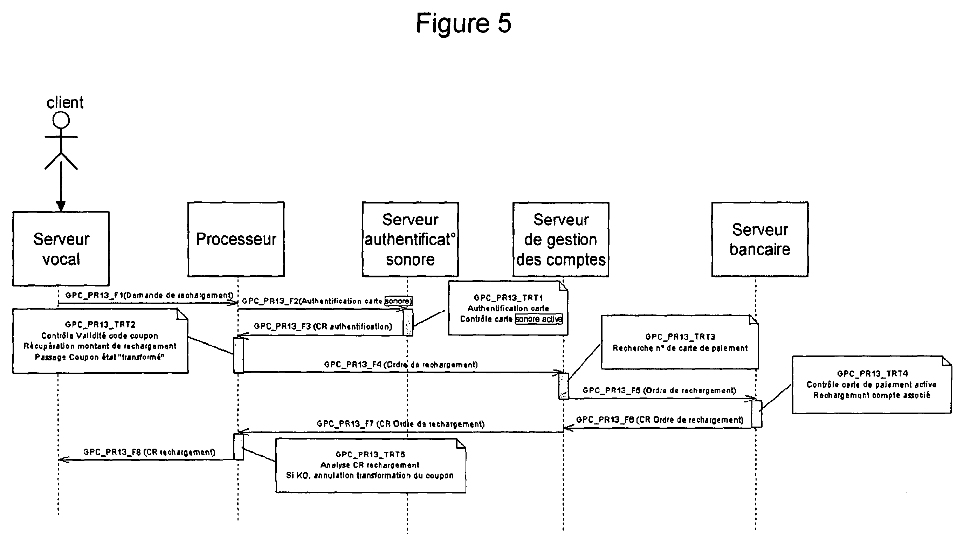

La figure 5 illustre le processus de rechargement d'une carte de paiement par coupon recharge.

Le client qui a composé le numéro de téléphone du serveur vocal (100) effectue une demande de rechargement par le coupon recharge acheté. Pour cela, il communique au processeur de gestion (330) via le serveur vocal :
- la signature sonore de la carte de paiement « XXXX YYYY ZZZZ ZZZZ »,
- le code PIN de rechargement de la carte de paiement,
- le code secret gratté du coupon recharge.

Par exemple, le serveur vocal demande au client de positionner sa carte sur son téléphone afin de jouer la séquence audio d'authentification. Une fois le signal correctement émis, le serveur vocal demande au client de saisir son code PIN de rechargement. Pendant la requête d'identification, le serveur vocal attend la réponse en diffusant une musique d'attente. Si le signal audio n'est pas correct ou si le code PIN de rechargement est invalide, le serveur vocal demande une nouvelle fois au client de s'identifier. On autorisera trois tentatives pour s'identifier avant de dissuader l'appel. En cas de dysfonctionnement de la transaction, le client pourra être transféré sur une plateforme d'aide technique.

Le processeur de gestion (330) effectue la demande d'authentification de la carte de paiement auprès du serveur d'authentification (300) en lui communiquant le son enregistré et le code PIN de rechargement ainsi que des données contextuelles (date et heure, ...).

Le serveur 300 réalise l'authentification de la carte en comparant, par logiciel, le son reçu avec les numéros enregistrés dans la base de données 302 et contrôle que la carte avec le numéro transmis soit bien active (information contenue dans la base de données également). Il retourne ensuite un message d'authentification contenant le numéro client de la carte et un code d'authentification réussie. Ce numéro client est un numéro unique utilisé en « interne » sur la plateforme de l'intermédiaire financier, par exemple de 5 chiffres. Le numéro client peut être le numéro N-N lorsque celui-ci est unique, ou le numéro unique de la carte de paiement, ou un tout autre numéro uniquement utilisé pour le référencement client à l'intérieur de la plateforme de gestion... La correspondance entre ce numéro client et les différents autres numéros (carte de paiement, numéro N-N) est mémorisée dans la base de données des correspondances (326).

Le serveur vocal demande ensuite au client de saisir le numéro du coupon qu'il vient de découvrir. Un contrôle de la longueur du numéro du coupon sera fait par le serveur vocal afin d'éviter les erreurs de transaction. Si le numéro est correct, le serveur vocal envoie une requête de rechargement au serveur. Dans le cas d'un crédit correct, le SVI vocalise le nouveau solde et invite le client à raccrocher. Une confirmation de la transaction par SMS est possible. Dans le cas d'un crédit incorrect (erreur de saisie du numéro du coupon, incident transactionnel), le serveur vocal transfère l'appel sur un centre d'appels.

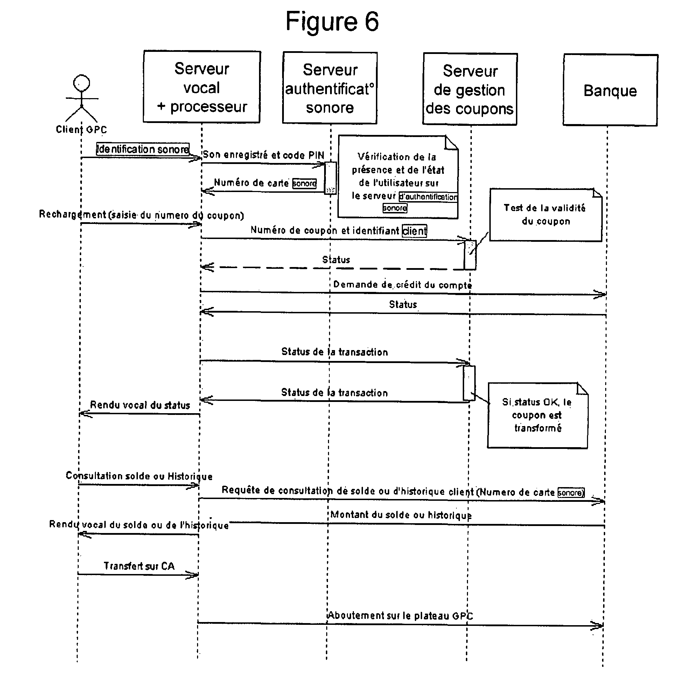

A réception de la confirmation d'authentification et du numéro du coupon, le processeur de gestion (330) contrôle la validité de ce coupon recharge, récupère la valeur du coupon et passe l'état du coupon à « transformé ». Un coupon est dit « transformé » lorsque, actif, il a été utilisé pour créditer une carte de paiement et « non transformé » lorsqu'il est actif et qu'il n'a toujours pas été utilisé dans le cadre d'une recharge de carte prépayée. Comme illustré par la figure 6, le test de validité du coupon est réalisé par le processeur de gestion des coupons. Celui-ci cherche dans sa base de données des coupons (312) l'enregistrement correspondant au numéro de coupon transmis. Les enregistrements de cette base comprennent, entre autres :
- numéro du coupon,
- valeur correspondante du coupon,
- devise,
- état actif/inactif,
- date de fin de validité.

En cas d'absence, le coupon est considéré comme non valide et le client est amené à ressaisir un numéro ou à terminer son appel. Si le numéro du coupon est bien présent, le processeur vérifie l'état actif du coupon (s'il ne l'est pas, par exemple parce que le coupon a été volé et mis inactif, l'opération de rechargement est avortée), la date de fin de validité par rapport au jour et récupère la valeur du coupon. Enfin, l'enregistrement correspondant au numéro du coupon est rendu « transformé » afin que ce numéro de coupon ne puisse pas permettre un autre rechargement de carte. Cette « transformation » peut être simplement réalisée par le retrait de l'enregistrement correspondant de la base de données 312.

Suite à cette « transformation », le processeur émet un ordre de rechargement de la carte de paiement en communiquant au serveur de gestion des comptes (320) :
- un numéro de transaction,
- le numéro client de la carte,
- le montant du rechargement,
- la devise du rechargement.

Le serveur comprend une première base de données des clients (322) comprenant au moins les champs :
- informations personnelles du client (nom, prénom, adresse, ...),
- état active/inactive,
- numéro unique de carte de paiement,
- solde du compte associé.

Et une deuxième base de données (326) des correspondances entre les numéros de cartes de paiement et les numéros client des moyens d'authentification sonore mis sur les cartes de paiement.

Le serveur de gestion des comptes détermine le numéro de carte de paiement à l'aide du numéro client transmis (base de données 326) puis crédite le solde du compte associé à cette carte du montant de rechargement transmis dans la devise adéquate si la carte a un état actif.

L'ordre de rechargement est alors transmis à la banque (2), elle-même transmettant au réseau interbancaire l'information comme quoi la carte de paiement a un nouveau solde. Puisque dans certains réseaux interbancaires, une transaction avec carte de paiement ne nécessite pas de vérifier l'état du compte associé mais se base uniquement sur les possibilités de paiement associées à la carte, cette transmission à tout le réseau interbancaire est importante : elle permet ainsi de mettre à jour les possibilités de paiement relatives à la carte.

Par cascade, un retour est réalisé suite à l'ordre de rechargement depuis les serveurs bancaires de mise à jour du réseau interbancaire jusqu'au serveur vocal en passant par le processeur qui valide le bon déroulement, et le cas échéant annulé la mise en état « transformé » du coupon si le rechargement n'a pas être effectué. Les messages de retour contiennent :
- numéro de transaction,
- numéro client de la carte de paiement,
- nouveau solde compte,
- devise,
- date de fin de validité du crédit.

Pour annuler la « transformation », le serveur passe le coupon éligible à l'état qui précédait l'état « transformé ». Le changement d'état des coupons fait l'objet d'un archivage. Les données archivées sont le numéro de série, l'état, la date de changement d'état, la référence du point de vente et l'identifiant de l'utilisateur qui a effectué la demande.

Une fois les informations saisies par le client, le cycle d'authentification, de validation de la carte, du coupon, de rechargement du compte, de la transmission de l'information sur le réseau interbancaire et du retour de confirmation est estimé quelques secondes, essentiellement moins de deux secondes. Le dimensionnement des liaisons réseau, des processeurs, des formats de cellules de données transmises est défini afin qu'une contrainte de cycle inférieur à deux secondes soit respecté jusqu'à des pics de huit millions de rechargements simultanés.

### Autres fonctionnalités.

Le serveur vocal offre de nombreux autres services: blocage de coupons/cartes perdus consultation solde, informations sur les dernières opérations sur compte, transmission des codes PIN de rechargement/utilisation perdu d'une carte de paiement et tout autre type de services.

La plateforme comprend également des centres d'appels d'informations, d'incidents techniques, de vol ou perte, ...

L'intermédiaire financier est une banque, une société privée, ...

La présente invention peut également être utilisée par les entreprises pour recharger des cartes de paiement de frais professionnels pour ses salariés: l'entreprise met à disposition de ses salariés un ensemble de carte de paiement prépayées nominatives et en fonction des dépenses/besoins de chacun effectue une rechargement des cartes par une interface Internet et des numéros (coupons) de recharge. Les salariés disposent ainsi de fonds nécessaires pour leurs dépenses professionnelles.

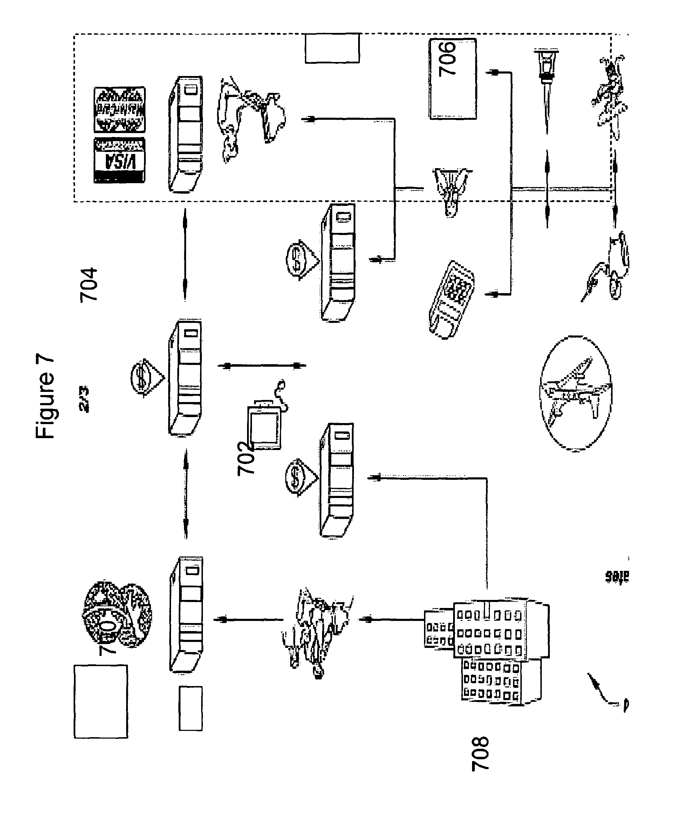

En référence à la figure 7, la société 700 crédite (702) son propre compte à partir duquel seront prélevés les frais professionnels des salariés, d'un montant prédéfini qu'elle autorise comme dépense au salarié avec sa carte de paiement prépayée. L'entreprise en informe (704) sa banque qui transmet l'information sur le réseau interbancaire Visa/Mastercard (noms commerciaux). Les cartes de paiement des bénéficiaires sont créditées (706) du montant prédéfini de banque en banque sur le réseau interbancaire.

Au bout de la chaîne, les employés (708) peuvent utiliser leur carte bancaire prépayée pendant leurs voyages d'affaire.

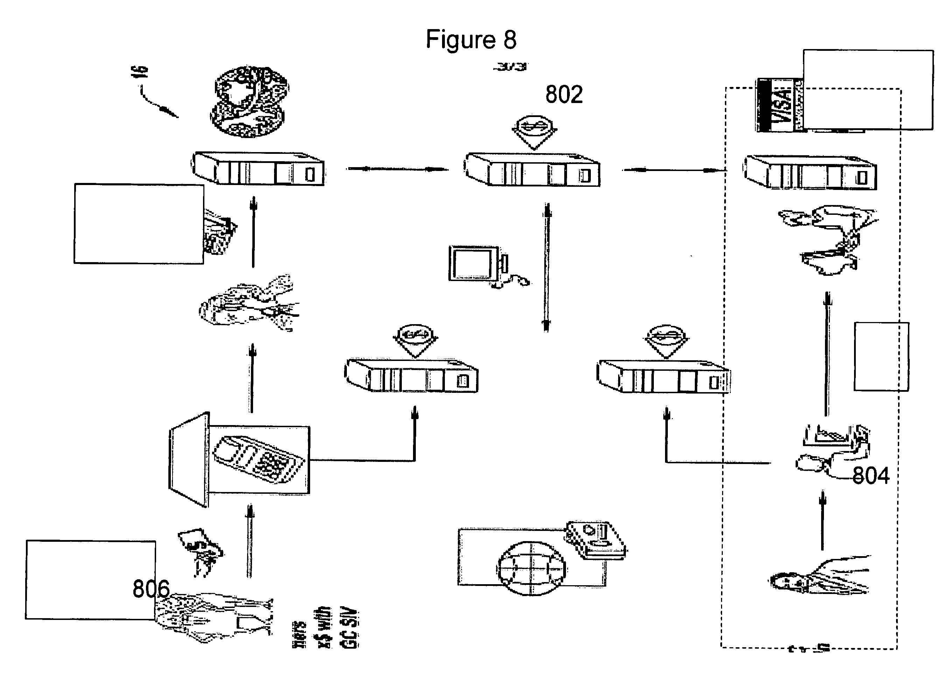

La figure 8 illustre l'utilisation de la présente invention dans le cadre de transfert d'argent.

Les clients achètent (800) des coupons d'une valeur de X € et téléphonent (802) au serveur de gestion des rechargements. La plateforme de l'intermédiaire financier vérifie l'état des coupons et carte de paiement à recharger puis envoie la demande de crédit de la carte de paiement (804). Cette demande diffuse l'information sur tout le réseau interbancaire et crédite la carte détenue, par exemple par un membre de la famille à l'autre bout du monde (806). Ce dernier peut alors dépenser les X € dans son pays par l'intermédiaire de la carte de paiement.

La présente invention peut également s'appliquer à des concepts tels que les factures de téléphone, les factures d'électricité.

## Revendications

1. Procédé de paiement, par carte bancaire prépayée fournie par un intermédiaire financier, d'une transaction avec un marchand, comprenant :
■ une étape de transmission à un serveur de gestion d'une requête comportant au moins le montant de la transaction et un identifiant de la carte bancaire ;
■ une étape de vérification et de modification de l'état du compte associé à l'identifiant de la carte bancaire, par le serveur de gestion, ce dernier comportant une base de données des identifiants de cartes bancaires et de l'état du solde des comptes associés auxdites cartes bancaires ;
■ une étape de transmission de l'autorisation de paiement audit marchand (TPE ou distributeur) ;
■ au moins une étape rechargement de la carte bancaire prépayée consistant à modifier, sur le serveur de gestion, l'information relative au solde disponible du titulaire de la carte bancaire ;
**caractérisé en ce que** :
■ ladite transmission de la requête est réalisée via un serveur bancaire ;
■ ledit rechargement est effectué par l'intermédiaire d'un coupon prépayé auquel est associé un numéro unique d'identification et auquel correspond un montant prédéfini, et comprend :
- une étape de transmission dudit identifiant du coupon et dudit identifiant de la carte bancaire audit serveur de gestion ;
- une étape de vérification, par ledit serveur de gestion, de la validité de l'identifiant de coupon reçu ;
- une étape de détermination de la valeur numéraire du montant associé au coupon ;
- une étape de modification de l'état de validité du coupon consommé dans le serveur de gestion ;
- une étape d'actualisation du solde de compte de ladite carte bancaire ;
■ ledit serveur de gestion comprend, en outre, une base de données référençant les numéros uniques des coupons prépayés, ainsi que l'état de validité et la valeur correspondant aux coupons.

2. Procédé de paiement selon la revendication 1, **caractérisé en ce que** lesdites étapes de rechargement comprennent, en outre et consécutivement à ladite étape d'actualisation du solde de compte, une étape de mise à jour, dans le réseau interbancaire auquel appartient la carte bancaire prépayée, du solde disponible pour ladite carte bancaire rechargée.

3. Procédé de paiement selon la revendication 1 ou 2, **caractérisé en ce que** ledit intermédiaire financier dispose d'un compte bancaire sur ledit serveur bancaire de l'intermédiaire
et **en ce que** ledit procédé comporte, en outre :
■ une étape de vente d'au moins un coupon ;
■ une étape de crédit sur ledit compte bancaire du montant des coupons vendus ;
■ une étape de débit périodique sur ledit compte bancaire des montants payés par les cartes bancaires fournies par ledit intermédiaire financier.

4. Procédé de paiement selon l'une des revendications 1 à 3, **caractérisé en ce que** ladite étape de transmission dudit identifiant du coupon et dudit identifiant de la carte bancaire audit serveur de gestion est réalisé par l'intermédiaire d'un serveur vocal interactif.

5. Procédé de paiement selon la revendication 4, **caractérisé en ce que** la transmission dudit identifiant du coupon et/ou dudit identifiant de la carte bancaire audit serveur vocal est une transmission sonore.

6. Procédé de paiement selon la revendication 4, **caractérisé en ce que** la transmission dudit identifiant du coupon et/ou dudit identifiant de la carte bancaire audit serveur vocal consiste à saisir les chiffres constituant l'identifiant unique du coupon et/ou de la carte bancaire.

7. Procédé de paiement selon l'une des revendications 1 à 3, **caractérisé en ce que** ladite étape de transmission dudit identifiant du coupon et dudit identifiant de la carte bancaire audit serveur de gestion est réalisé par l'intermédiaire d'un site Internet sécurisé.

8. Coupon de rechargement pour la mise en oeuvre du procédé selon l'une quelconque des revendications précédentes, comprenant un numéro unique d'identification et des moyens de masquage à gratter pour cacher ledit numéro unique, **caractérisé en qu'**il comprend, en outre, des moyens de transmission sonore dudit numéro unique.

9. Coupon de rechargement selon la revendication 8, **caractérisé en ce que** ledit numéro unique comprend entre 10 et 16 chiffres.

10. Système de paiement par carte bancaire prépayée pour la mise en oeuvre du procédé selon l'une quelconque des revendications 1 à 7, comprenant :
■ Un réseau interbancaire international comprenant une pluralité de terminaux ;
■ Une pluralité de cartes bancaires prépayées fournies par un intermédiaire financier et appartenant audit réseau interbancaire ;
■ Une pluralité de coupons prépayés de rechargement desdites cartes bancaires selon l'une des revendications 8 et 9 ;
■ Un serveur de gestion dudit intermédiaire financier, ledit serveur de gestion comportant une base de données des numéros uniques de coupons ainsi que l'état de validité et la valeur correspondante des coupons, et une base de données des identifiants de cartes bancaires et de l'état du solde disponible des cartes bancaires associées ;
■ Un serveur bancaire connecté au réseau interbancaire et au serveur de gestion, ledit serveur bancaire comprenant un compte bancaire dudit intermédiaire financier crédité du montant des coupons vendus et débité périodiquement des montants payés par lesdites cartes de paiement.

11. Système de paiement selon la revendication précédente, **caractérisé en ce qu'**il comprend, en outre, un serveur vocal relié audit serveur de gestion et par lequel l'utilisateur désirant recharger sa carte bancaire prépayé, transmet l'identifiant unique de sa carte bancaire et du coupon de rechargement.

12. Système de paiement selon la revendication 10, **caractérisé en ce qu'**il comprend, en outre, un serveur Internet connecté audit serveur de gestion et hébergeant un site Internet sécurisé apte à réaliser les opérations de transmission des identifiants uniques d'une carte bancaire prépayée et d'un coupon de rechargement pour le rechargement effectif de ladite carte bancaire.

## Claims

1. Payment method, by prepaid bankcard provided by a financial intermediary, of a transaction with a merchant comprising:
- a step of transmission of a request to a management server, the request comprising at least the amount of the transaction and an identifier of the bankcard;
- a step of verification and modification of the status of the account associated with the bankcard identifier by the management server, this server comprising a database of the bankcard identifiers and the balance status of the accounts associated with said bank cards;
- a step of transmission of the payment authorization to said merchant (EPT or automated dispensing machine);
- at least one recharging step of the prepaid bankcard, said recharging step consisting of modifying on the management server, the information relative to the available balance of the bankcard holder;
**characterized in that**:
- said transmission of the request is implemented via a bank server;
- recharging is implemented via the intermediary of a prepaid coupon with which is associated a unique identification number and to which corresponds a predefined amount, and said recharging step comprises:
• a step of transmission of said coupon identifier and said bankcard identifier to said management server;
• a step of verification by said management server of the validity of the received coupon identifier;
• a step of determination of the numeric value of the amount associated with the coupon;
• a step of modification of the validity status of the consumed coupon, on the management server;
• a step of updating the account balance of said bankcard;
- said management server moreover comprises a database of unique coupon numbers as well as the validity status and the value corresponding to the coupons.

2. Payment method according to claim 1, **characterized in that** said recharging steps moreover comprise, subsequent to said step of updating the account balance, a step of updating the available balance for said recharged bankcard, in the interbank network to which the prepaid bankcard belongs.

3. Payment method according to claim 1 or 2, **characterized in that** said financial intermediary has available a bank account on said intermediary's bank server
and **in that** said method furthermore comprises:
• a step of selling at least one coupon;
• a step of crediting on said bank account the amount of the sold coupons;
• a step of periodic debiting from said bank account of the amounts paid by the bankcards provided by said financial intermediary.

4. Payment method according to one of claims 1 to 3, **characterized in that** said step of transmission of said coupon identifier and said bankcard identifier to said management server is implemented via the intermediary of an interactive voice server.

5. Payment method according to claim 4, **characterized in that** the transmission of said coupon identifier and/or said bankcard identifier to said voice server is a sound transmission.

6. Payment method according to claim 4, **characterized in that** the transmission of said coupon identifier and/or said bankcard identifier to said voice server consists of inputting the digits constituting the unique identifier of the coupon and/or the bankcard.

7. Payment method according to one of claims 1 to 3, **characterized in that** said step of transmission of said coupon identifier and said bankcard identifier to said management server is implemented by the intermediary of a secure internet site.

8. Recharge coupon for the implementation of the method according to any one of the preceding claims, comprising a unique identification number and covering means to be scratched off that hide said unique number, **characterized in that** it further comprises means for the sound transmission of said unique number.

9. Recharge coupon according to claim 8, **characterized in that** said number comprises between 10 and 16 digits.

10. Payment system by prepaid bankcard for the implementation of the method according to any one of claims 1 to 7, comprising:
• an international interbank network comprising a multiplicity of terminals;
• a multiplicity of prepaid bankcards provided by a financial intermediary and belonging to said interbank network;
• a multiplicity of prepaid coupons for recharging said bankcards according to one of claims 8 to 9;
• a management server of said financial intermediary, said management server comprising a database of the unique coupon numbers as well as the validity status and the corresponding value of the coupons, and a database of the bankcard identifiers and the status of the available balance of the associated bankcards;
• a bank server connected to the interbank network and to the management server, said bank server comprising a bank account of said financial intermediary credited by the amount of the sold coupons and periodically debited from the amounts paid by said payment cards.

11. Payment system according to the preceding claim, **characterized in that** it furthermore comprises a voice server connected to said management server and by which the user wishing to recharge his prepaid bankcard transmits the unique identifiers of his bankcard and the recharge coupon.

12. Payment system according to claim 10, **characterized in that** it furthermore comprises an internet server connected to said management server and housing a secure internet site capable of implementing the operations of transmission of the unique identifiers of a prepaid bankcard and of a recharge coupon for the effective recharging of said bankcard.

## Patentansprüche

1. Zahlungsverfahren einer Transaktion mit einem Händler per im Voraus bezahlter, von einem finanziellen Vermittler gelieferter Bankenkarte, das Folgendes umfasst:
* eine Übertragungsstufe einer Anfrage auf einen Verwaltungsserver wenigstens mit dem Betrag der Transaktion und einer Kennung der Bankkarte;
* eine Überprüfungs- und Änderungsstufe des mit der Kennung der Bankenkarte verbundenen Kontostandes durch den Verwaltungsserver, wobei letzterer eine Datenbank der Kennungen von Bankkarten und den Stand des Saldos der mit den genannten Bankkarten verbundenen Konten umfasst;
* eine Übertragungsstufe der Zahlungsgenehmigung an den genannten Händler (elektronisches Zahlungs-Terminal oder Automat);
* wenigstens eine Wiederaufladestufe der im Voraus bezahlten Bankkarte, bestehend aus der Änderung der Information auf dem Verwaltungsserver bezüglich des verfügbaren Saldos des Inhabers der Bankkarte;
**dadurch gekennzeichnet, dass**:
* die genannte Transaktion der Anfrage über einen Bankenserver realisiert wird;
* das genannte Wiederaufladen über einen im Voraus bezahlten Coupon durchgeführt wird, dem eine einzigartige Kennnummer zugeordnet ist und dem ein vordefinierter Betrag entspricht und der Folgendes umfasst:
- eine Übertragungsstufe der genannten Kennung des Coupons und der genannten Kennung der Bankenkarte an den genannten Verwaltungsserver;
- eine Überprüfungsstufe der Gültigkeit der empfangenen Coupon-Kennung durch den genannten Verwaltungsserver;
- eine Bestimmungsstufe des Zahlenwertes des dem Coupon zugeordneten Betrags;
- eine Änderungsstufe des Gültigkeitszustandes des im Verwaltungsserver verbrauchten Coupons;
- eine Aktualisierungsstufe des Kontensaldos der genannten Bankenkarte;
* der genannte Verwaltungsserver darüber hinaus eine die einzigartigen Nummern der im Voraus bezahlten Coupons sowie den Gültigkeitszustand und den den Coupons entsprechenden Wert nachweisenden Datenbank umfasst.

2. Zahlungsverfahren gemäß Anspruch 1, **dadurch gekennzeichnet, dass** die genannten Wiederaufladestufen darüber hinaus und im Anschluss an die genannte Aktualisierungsstufe des Kontensaldos eine Aktualisierungsstufe des für die genannten, wieder aufgeladene Bankenkarte verfügbaren Saldos in dem zwischen den Banken bestehenden Netz umfassen, zu dem die im Voraus bezahlte Bankenkarte gehört.

3. Zahlungsverfahren gemäß Anspruch 1 oder 2, **dadurch gekennzeichnet, dass** der genannte finanzielle Vermittler über ein Bankkonto auf dem genannten Bankserver des Vermittlers verfügt
und dass das genannte Verfahren darüber hinaus Folgendes umfasst:
* eine Verkaufsstufe wenigstens eines Coupons;
* eine Gutschriftsstufe des Betrages der verkauften Coupons auf dem genanten Bankkonto;
* eine regelmäßige Belastungsstufe der durch die von dem genannten finanziellen Vermittler gelieferten Bankenkarten bezahlten Beträge auf dem genannten Bankkonto.

4. Zahlungsverfahren gemäß Anspruch 1 bis 3, **dadurch gekennzeichnet, dass** die genannte Übertragungsstufe der genannten Kennung des Coupons und der genannten Kennung der Bankenkarte an den genannten Verwaltungsserver über einen interaktiven Sprachserver realisiert wird.

5. Zahlungsverfahren gemäß Anspruch 4, **dadurch gekennzeichnet, dass** die Übertragung der genannten Kennung des Coupons und / oder der genannten Kennung der Bankenkarte an den genannten Sprachserver eine Tonübertragung ist.

6. Zahlungsverfahren gemäß Anspruch 4, **dadurch gekennzeichnet, dass** die Übertragung der genannten Kennung des Coupons und / oder der genannten Kennung der Bankenkarte an den Sprachserver in der Eingabe der die einzigartige Kennung des Coupons und / oder der Bankenkarte bildenden Zahlen besteht.

7. Zahlungsverfahren gemäß Anspruch 1 bis 3, **dadurch gekennzeichnet, dass** die genannte Übertragungsstufe der genannten Kennung des Coupons und der Kennung der Bankenkarte an den genannten Verwaltungsserver über eine gesicherte Internetsite realisiert wird.

8. Wiederaufladecoupon für die Umsetzung des Verfahrens gemäß einem der vorherigen Ansprüche mit einer einzigartigen Kennnummer und Abdeckmitteln zum Abrubbeln zum Abdecken der genannten einzigartigen Nummer, **dadurch gekennzeichnet, dass** er darüber hinaus Mittel zur Tonübertragung der genannten einzigartigen Nummer umfasst.

9. Wiederaufladecoupon gemäß Anspruch 8, **dadurch gekennzeichnet, dass** die genannte einzigartige Nummer zwischen 10 und 16 Ziffern umfasst.

10. Zahlungssystem per im Voraus bezahlter Bankenkarte für die Umsetzung des Verfahrens gemäß Anspruch 1 bis 7, das Folgendes umfasst:
* Ein zwischen den Banken bestehendes internationales Netz mit einer Vielzahl an Terminals;
* Eine Vielzahl von im Voraus bezahlten, von einem finanziellen Vermittler gelieferten und zu dem genannten zwischen den Banken bestehenden Netz gehörenden Bankenkarten;
* Eine Vielzahl von im Voraus bezahlten Wiederaufladecoupons der genannten Bankenkarten gemäß Anspruch 8 und 9;
* Einen Verwaltungsserver des genannten finanziellen Vermittlers, wobei der genannte Verwaltungsserver eine Datenbank der einzigartigen Couponnummern sowie des Gültigkeitszustandes und des den Coupons entsprechenden Wertes und eine Datenbank der Kennungen der Bankenkarten und den Stand des verfügbaren Saldos der damit verbundenen Bankenkarten umfasst;
* Einen an das zwischen den Banken bestehende Netz und an den Verwaltungsserver angeschlossenen Bankenserver, wobei der genannte Bankenserver ein Bankkonto des genannten finanziellen Vermittlers umfasst, auf den der Betrag der verkauften Coupons gutgeschrieben wird und auf dem die durch die genannten Zahlungskarten bezahlten Beträge regelmäßig belastet werden.

11. Zahlungssystem gemäß dem vorherigen Anspruch, **dadurch gekennzeichnet, dass** er darüber hinaus einen Sprachserver umfasst, der an den genannten Verwaltungsserver angeschlossen ist und durch den der Benutzer, der seine im Voraus bezahlte Bankenkarte wieder aufladen möchte, die einzigartige Kennung seiner Bankenkarte und des Wiederaufladecoupons überträgt.

12. Zahlungssystem gemäß Anspruch 10, **dadurch gekennzeichnet, dass** es darüber hinaus einen Internetserver umfasst, der an den genannten Verwaltungsserver angeschlossen ist und eine gesicherte Internetsite beherbergt, die geeignet ist, die Übertragungsoperationen der einzigartigen Kennungen einer im Voraus bezahlten Bankenkarte und eines Wiederaufladecoupons zum effektiven Wiederaufladen der genannten Bankenkarte zu realisieren.
